(19) Europäisches Patentamt
European Patent Office
Office européen des brevets

(11) EP 4 464 486 A1

(12) **EUROPEAN PATENT APPLICATION**
published in accordance with Art. 153(4) EPC

(43) Date of publication:
**20.11.2024 Bulletin 2024/47**

(21) Application number: **23740288.8**

(22) Date of filing: **12.01.2023**

(51) International Patent Classification (IPC):
***B28C 7/04*** *(2006.01)* ***C08F 290/06*** *(2006.01)*
***C08F 220/04*** *(2006.01)* ***C08F 220/10*** *(2006.01)*
***C04B 24/00*** *(2006.01)* ***C04B 24/26*** *(2006.01)*
***C04B 28/02*** *(2006.01)*

(52) Cooperative Patent Classification (CPC):
**B28C 7/04; C04B 24/00; C04B 24/26; C04B 28/02; C08F 220/04; C08F 220/10; C08F 290/06**

(86) International application number:
**PCT/JP2023/000564**

(87) International publication number:
**WO 2023/136280 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2022 JP 2022002963**

(71) Applicant: **Nippon Shokubai Co., Ltd.**
**Osaka-shi, Osaka 541-0043 (JP)**

(72) Inventor: **AKAO, Yuya**
**Suita-shi, Osaka 564-0034 (JP)**

(74) Representative: **Cabinet Beau de Loménie**
**158, rue de l'Université**
**75340 Paris Cedex 07 (FR)**

# (54) GRANULATING AGENT FOR FRESH CONCRETE

(57) The present invention aims to provide a granulating agent for fresh concrete that has an excellent ability to granulate fresh concrete. Provided is a granulating agent for fresh concrete, containing: (i) a polymer that exhibits an acidic pH when in the form of an aqueous solution or an aqueous dispersion or (ii) a salt of the polymer.

EP 4 464 486 A1

## Description

TECHNICAL FIELD

The present invention relates to a technique for granulating fresh concrete.

BACKGROUND ART

Fresh concrete (commonly known as ready-mixed concrete) is generally produced at a ready-mixed concrete factory and then transported to construction sites by means such as mixer trucks for use. At such construction sites, fresh concrete often has not been used up (remaining concrete). Some of the remaining concrete is returned to the ready-mixed concrete factory (this remaining concrete is referred to as returned concrete). In practice, such remaining concrete and ready-mixed concrete are generally washed and subjected to separation (sludge, neutralized water, stones, and sand) and then landfilled as industrial waste. This treatment however requires significant effort and cost, and also leads to problems such as production of a large amount of industrial waste. In Japan, around 2% to 5% of ready-mixed concrete shipped is surplus as remaining concrete and ready-mixed concrete.

Regarding such problems, systems for actively reusing remaining concrete and returned concrete have been considered. Specifically, a treatment agent for remaining concrete and returned concrete (e.g., Zankon buster, re-con zero evo, a residual concrete treatment agent available from Nissokouzai Co., Ltd.) is added to and mixed with remaining concrete or returned concrete to produce a granulated material, and the granulated material is reused as new building materials (e.g., paving materials, roadbed materials, materials for civil engineering structures and buildings). This system is currently one of the highly anticipated initiatives that will contribute to the circular economy.

The techniques relating to the treatment agent are also suggested in the following literatures.

Patent Literature 1 suggests a technique for granulation including adding a super absorbent polymer (e.g., anionic polyacrylamide) and a quick setting agent to a fresh cement composition, followed by mixing. Patent Literature 2 suggests a method of aggregating surplus ready-mixed concrete, including adding a polymer aggregating agent containing anionic polyacrylamide as a main component to surplus ready-mixed concrete, followed by stirring.

However, at present, it is difficult to say that remaining concrete and returned concrete are sufficiently reused. In response, there is a strong demand for the expansion of types of the treatment agent for remaining concrete and returned concrete and the improvement of convenience and functionality in their use, in order to actively promote the reuse of remaining concrete and returned concrete.

CITATION LIST

- Patent Literature

Patent Literature 1: WO 2012-084716
Patent Literature 2: JP 2017-124569 A

SUMMARY OF INVENTION

- Technical Problem

The present invention aims to provide a granulating agent for fresh concrete that has an excellent ability to granulate fresh concrete.

- Solution to Problem

As a result of extensive studies, the present inventor found that a specific polymer has an excellent ability to granulate fresh concrete. Based on this knowledge, the present inventor has completed the present invention, which is described below.

Preferred configurations of the present invention are described in (1) to (10) and the like below.

(1) A granulating agent for fresh concrete, containing:

(i) a polymer that exhibits an acidic pH when in the form of an aqueous solution or an aqueous dispersion or

(ii) a salt of the polymer.

(2) The granulating agent for fresh concrete according to (1),
wherein the polymer (polymer that exhibits an acidic pH and/or a salt of the polymer) is emulsified.
(3) The granulating agent for fresh concrete according to (1) or (2),
wherein the polymer contains a structural unit containing a carboxy group.
(4) The granulating agent for fresh concrete according to any one of (1) to (3),
wherein the polymer is a copolymer further containing a hydrophobic structural unit.
(5) The granulating agent for fresh concrete according to any one of (1) to (4),
wherein the granulating agent contains a polymer that exhibits an acidic pH when in the form of an aqueous solution or an aqueous dispersion, and the polymer exhibits a pH of 2.0 to 5.0 when in the form of a 10.0% by mass aqueous solution or aqueous dispersion at 25.0°C.
(6) The granulating agent for fresh concrete according to any one of (1) to (5),
wherein the polymer has a weight average molecular weight of 1,000 to 10,000,000.
(7) The granulating agent for fresh concrete according to any one of (1) to (6),
wherein the granulating agent contains a polymer that exhibits an acidic pH when in the form of an aqueous solution or an aqueous dispersion, and the polymer is emulsified in water as a dispersion medium.
(8) The granulating agent for fresh concrete according to any one of (1) to (7), which does not contain a quick setting accelerator.
(9) A method of forming a granulated material, containing:

adding the granulating agent according to any one of (1) to (8) to fresh concrete, followed by stirring to give a mixture; and
curing the mixture.

(10) A granulated material containing:

the granulating agent according to any one of (1) to (8); and
cement.

- Advantageous Effects of Invention

The granulating agent for fresh concrete of the present invention has an excellent ability to granulate fresh concrete.

DESCRIPTION OF EMBODIMENTS

The following describes matters relating to a granulating agent for fresh concrete of the present invention, a method of using the agent, and a composition containing the agent. The following description serves as examples to describe the present invention, and is not intended to limit the present invention to the scope of the examples.

(Polymer)

A granulating agent for fresh concrete of the present invention contains a polymer that exhibits an acidic pH when in the form of an aqueous solution or an aqueous dispersion or a salt of the polymer. The granulating agent for fresh concrete of the present invention preferably contains a polymer that exhibits an acidic pH when in the form of an aqueous solution or an aqueous dispersion, and more preferably contains a polymer that exhibits an acidic pH when in the form of an aqueous dispersion.
Herein, the acidic pH means a pH lower than 7.0, and a basic pH means a pH higher than 7.0.
The polymer that exhibits an acidic pH is one that exhibits an acidic pH when in the form of a 10.0% by mass aqueous solution or aqueous dispersion at 25.0°C, preferably a pH of 2.0 to 6.0, more preferably a pH of 2.0 to 5.0, still more preferably a pH of 2.0 to 4.0.
The pH can be measured by the method described in the EXAMPLES.
The aqueous solution or aqueous dispersion can be prepared by any known suitable method, such as dissolving or dispersing the polymer in distilled water to a predetermined concentration.
The salt of the polymer may be a salt obtained by neutralizing a polymer that exhibits an acidic or basic pH when in the form of an aqueous solution or an aqueous dispersion, preferably a salt obtained by neutralizing a polymer that exhibits an acidic pH when in the form of an aqueous solution or an aqueous dispersion. Specific examples of the salt include

sodium salts, potassium salts, magnesium salts, calcium salts, and aluminum salts. Preferred are sodium salts.

(Structural unit containing acidic functional group)

The polymer that exhibits an acidic pH when in the form of an aqueous solution or an aqueous dispersion in the present invention contains at least one structural unit containing an acidic functional group.

Examples of the acidic functional group include a carboxy group, a sulfonic acid group, a phosphoric acid group, a phosphorous acid group, and a hydroxy group. Preferred is a carboxy group, a sulfonic acid group, or a phosphoric acid group, and more preferred is a carboxy group.

[Chem. 1]

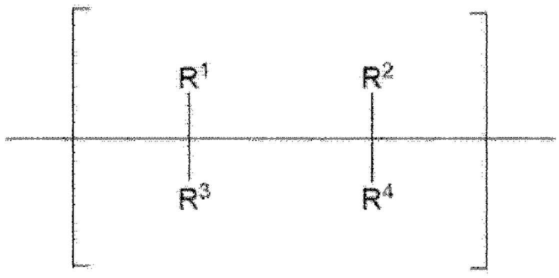

(I)

A specific example of the structural unit containing an acidic functional group is a structural unit represented by the above formula (I).

In the formula (I), at least one of $R^1$ to $R^4$ is an acidic functional group, and the others among $R^1$ to $R^4$ are the same as or different from each other and are each a hydrogen atom or a C1-C8 unsubstituted or substituted monovalent hydrocarbon group.

In the formula (I), preferably, one or two of $R^1$ to $R^4$ are acidic functional groups, and more preferably, one of $R^1$ to $R^4$ is an acidic functional group.

Regarding the others among $R^1$ to $R^4$, preferably, two or more of these are hydrogen atoms, more preferably, all of these are hydrogen atoms. The C1-C8 unsubstituted or substituted monovalent hydrocarbon group is preferably a C1-C4 unsubstituted monovalent hydrocarbon group. Specific examples of the unsubstituted monovalent hydrocarbon group include linear, branched, or cyclic alkyl groups, linear, branched, or cyclic alkenyl groups, aryl groups, and aralkyl groups. Preferred are alkyl groups, and particularly preferred is a methyl group. The substituted monovalent hydrocarbon group is a group in which at least one or all of the hydrogen atoms are replaced by a substituent. Examples of the substituent include alkoxy groups such as a methoxy group, an ethoxy group, and an (iso)propoxy group and halogen atoms such as a fluorine atom, a chlorine atom, a bromine atom, and an iodine atom.

The structural unit represented by the formula (I) may be a structural unit formed by cleavage of a carbon-carbon double bond in an unsaturated carboxylic acid monomer. Examples of the unsaturated carboxylic acid monomer include acrylic acid, methacrylic acid, crotonic acid, tiglic acid, 3-methylcrotonic acid, 2-methyl-2-pentenoic acid, maleic acid, fumaric acid, itaconic acid, citraconic acid, mesaconic acid, and 2-methylene glutaric acid. Preferred is acrylic acid, methacrylic acid, maleic acid, or fumaric acid, and more preferred is acrylic acid.

The acidic functional group herein refers to one in an unneutralized state, unless otherwise specified.

(Hydrophobic structural unit)

The polymer in the present invention is desirably a copolymer containing at least one hydrophobic structural unit.

The hydrophobic structural unit does not contain any of the acidic functional groups described above and is derived from a hydrophobic monomer whose homopolymer has a solubility parameter of 15 or less.

The solubility parameter is a value calculated by the method described on pages 147 to 154 of "POLYMER ENGINEERING AND SCIENCE" (1974, Vol. 14, No. 2).

The method is outlined below. The solubility parameter (δ) $(cal/cm^3)^{1/2}$ of a homopolymer is calculated using the following calculation technique based on the evaporation energy (Δei) and molar volume (Δvi) of the constituent unit forming the polymer.

$$\delta = (\Delta ei/\Delta vi)^{1/2} (cal/cm^3)^{1/2}$$

The solubility parameter is preferably 14 or less, more preferably 13 or less, still more preferably 12 or less,

particularly preferably 11 or less. The solubility parameter is usually 5 or more.

Examples of the hydrophobic monomer include esters of (meth)acrylic acid and alcohols optionally containing substituents ((meth)acrylates optionally containing substituents); aromatics vinyl monomers (e.g., styrene); olefinic monomers (e.g., propylene); esters of unsaturated alcohols and carboxylic acids (e.g., vinyl acetate); vinyl halides (e.g., vinyl chloride); alkyl vinyl ethers (e.g., methyl vinyl ether, ethyl vinyl ether); addition reaction products of unsaturated monomers containing a C2-C8 cyclic ether-containing group and C1-C20 alcohols (e.g., 1-allyloxy-3-butoxypropan-2-ol); adducts of alkylene oxide with C2-C20 unsaturated alcohols (e.g., an adduct of ethylene oxide with an allyl alcohol, an adduct of ethylene oxide with a methallyl alcohol, an adduct of ethylene oxide with isoprenol) and products obtained by hydrophobically modifying ends of these adducts; and cyclic vinyl monomers (e.g., N-vinylpyrrolidone).

The hydrophobic structural unit is preferably free of a hydrophilic functional group.

[Chem. 2]

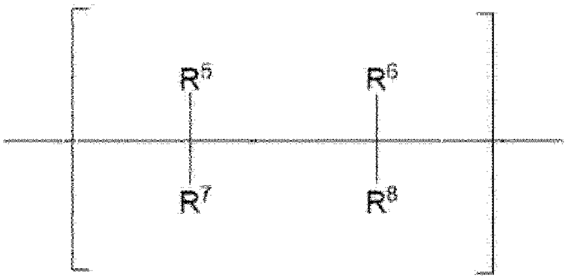

(II)

A preferred example of the hydrophobic structural unit is a structural unit represented by the above formula (II). In the formula (II), $R^5$ to $R^8$ are the same as or different from each other and are each a hydrogen atom, a C1-C8 unsubstituted or substituted monovalent hydrocarbon group, or $-COOM^1$ ($M^1$ is a C1-C8 monovalent hydrocarbon group). Preferably, one of $R^5$ to $R^8$ is $-COOM^1$ and the others among $R^5$ to $R^8$ are each a hydrogen atom or a C1-C4 unsubstituted monovalent hydrocarbon group, and more preferably, one of $R^5$ to $R^8$ is $-COOM^1$ and the others among $R^5$ to $R^8$ are each a hydrogen atom.

$M^1$ is preferably a methyl group, an ethyl group, a propyl group, or a butyl group, more preferably an ethyl group.

Specific examples of the unsubstituted monovalent hydrocarbon group include linear, branched, or cyclic alkyl groups, linear, branched, or cyclic alkenyl groups, aryl groups, and aralkyl groups. Preferred are alkyl groups, and particularly preferred is a methyl group. The substituted monovalent hydrocarbon group is a group in which at least one or all of the hydrogen atoms are replaced by a substituent. Examples of the substituent include alkoxy groups such as a methoxy group, an ethoxy group, and an (iso)propoxy group.

The structural unit represented by the formula (II) may be a structural unit formed by cleavage of a carbon-carbon double bond in a hydrophobic monomer. Examples of the hydrophobic monomer include styrene, acrylic esters, and methacrylic esters. Preferred are acrylic esters or methacrylic esters, and more preferred are acrylic esters. Specific examples thereof include methyl acrylate, ethyl acrylate, butyl acrylate, and 2-ethylhexyl acrylate. Particularly preferred is ethyl acrylate.

[Chem. 3]

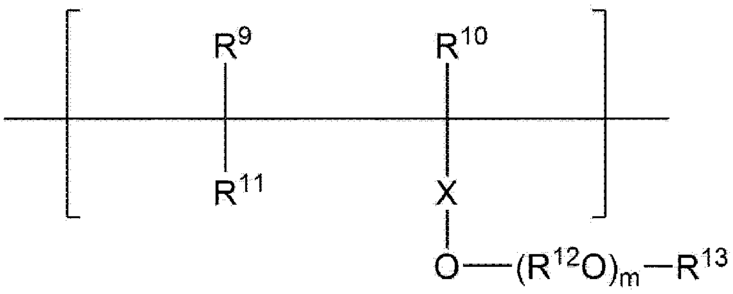

(III)

A preferred example of the hydrophobic structural unit is also a structural unit represented by the above formula (III). In the formula (III), X is C=O or $(CH_2)_p$, where p is an integer of 0 to 5; $R^{12}$ is a C2-C8 hydrocarbon group; m is an integer of 5 to 300; $R^{13}$ is a hydrogen atom or a C1-C8 monovalent hydrocarbon group; and $R^9$ to $R^{11}$ are the same as or different from each other and are each a hydrogen atom or a C1-C8 unsubstituted or substituted monovalent hydrocarbon group.

The p is preferably an integer of 0 to 2, more preferably 0. The X is preferably C=O or $(CH_2)_2$, more preferably

C=O. $R^{12}$ is preferably a C2-C4 hydrocarbon group, more preferably $C_2H_4$. The m is preferably an integer of 5 to 150, and more preferably an integer of 8 to 90. $R^{13}$ is preferably a hydrogen atom or a C1-C4 monovalent hydrocarbon, more preferably $CH_3$. $R^9$ to $R^{11}$ are each preferably a hydrogen atom or a C2-C4 monovalent hydrocarbon group. More preferably, one of $R^9$ to $R^{11}$ is a C2-C4 monovalent hydrocarbon group, with a methyl group being desired, and the others among $R^9$ to $R^{11}$ are hydrogen atoms.

The structural unit represented by the formula (III) may be a structural unit formed by cleavage of a carbon-carbon double bond in a monomer containing a polyalkylene glycol group (terminated with a hydroxy group), an alkoxypolyalkylene glycol group (terminated with an alkyl group), or a phenoxypolyalkylene glycol group (terminated with an aryl group) (hereinafter referred to as a monomer containing a polyalkylene glycol group and the like). Examples of the monomer containing a polyalkylene glycol group and the like include polyalkylene glycol monomethacrylates, polyalkylene glycol monoacrylates, alkoxypolyalkylene glycol monomethacrylates, alkoxypolyalkylene glycol monoacrylates, phenoxypolyalkylene glycol monomethacrylates, and phenoxypolyalkylene glycol monoacrylates. Preferred are alkoxypolyalkylene glycol monoacrylates or alkoxypolyalkylene glycol monoacrylates, and more preferred are alkoxypolyalkylene glycol monomethacrylates.

Examples of the alkoxypolyalkylene glycol monomethacrylates include methoxypolyethylene glycol-methacrylate, octoxypolyethylene glycol-polypropylene glycol-methacrylate, lauroxypolyethylene glycol-methacrylate, and stearoxypolyethylene glycol-methacrylate. Preferred is methoxypolyethylene glycol-methacrylate.

Examples of the phenoxypolyalkylene glycol monomethacrylates include phenoxypolyethylene glycol methacrylate.

Examples of the alkoxypolyalkylene glycol monoacrylates include methoxypolyethylene glycol-acrylate.

Examples of the phenoxypolyalkylene glycol monoacrylates include nonylphenoxypolypropylene glycol-acrylate and nonylphenoxypolyethylene glycol-polypropylene glycol acrylate.

Examples of the polyalkylene glycol monomethacrylates include polyethylene glycol-monomethacrylate, polypropylene glycol-monomethacrylate, polyethylene glycol-propylene glycol-monomethacrylate, polyethylene glycol-tetramethylene glycol-monomethacrylate, and propylene glycol-polybutylene glycol-monomethacrylate.

Examples of the polyalkylene glycol monoacrylates include polyethylene glycol-monoacrylate and polypropylene glycol-monoacrylate.

In addition to the above-described monomers, the monomer containing a polyalkylene glycol group may be, for example, a compound in which ethylene oxide is added (for example, the average number of moles of ethylene oxide added is 50) to the hydroxy group in 3-methyl-3-buten-1-ol (isoprenol).

(Neutralized structural unit)

The salt of the polymer in the present invention preferably contains at least one structural unit containing a neutralized acidic or basic functional group. More preferably, it contains a structural unit containing a neutralized acidic functional group. Preferred examples of the structural unit containing an acidic functional group include those listed above. The salt of the polymer in the present invention can be obtained by neutralizing any of such structural units.

A specific example of the basic functional group (unneutralized) is an amino group.

In the salt of the polymer in the present invention, a ratio of structural unit (mol) containing a neutralized acidic or basic functional group to structural unit (mol) containing a neutralized or unneutralized acidic functional group or a neutralized or unneutralized basic functional group, i.e., a value represented by (structural unit containing neutralized acidic functional group or neutralized basic functional group (e.g., a structural unit derived from sodium acrylate (mol))/(structural unit containing neutralized or unneutralized acidic functional group or neutralized or unneutralized basic functional group (e.g., a total amount (mol) of the structural unit derived from sodium acrylate and the structural unit derived from acrylic acid), is preferably 0.2 or more, more preferably 0.3 or more, still more preferably 0.4 or more. The ratio is preferably 0.8 or less, more preferably 0.6 or less.

The salt of the polymer in the present invention may be in the form of an aqueous solution or an aqueous dispersion from the viewpoint of ease of handling.

Regarding the salt of the polymer in the present invention, when the salt of the polymer contains a structural unit containing a neutralized acidic or basic functional group and exhibits an acidic pH when in the form of an aqueous solution or an aqueous dispersion, the salt of the polymer is regarded as (i) the polymer that exhibits an acidic pH when in the form of an aqueous solution or an aqueous dispersion in the present invention. When the salt of the polymer contains a structural unit containing a neutralized acidic or basic functional group and exhibits a neutral or basic pH when in the form of an aqueous solution or an aqueous dispersion, the salt of the polymer is regarded as (ii) the salt of the polymer in the present invention.

The aqueous dispersion in the present invention is one in which a polymer or a salt of a polymer used as a dispersoid is uniformly dispersed in water used as a dispersion medium, and corresponds to, for example, a common emulsion. In other words, the aqueous dispersion herein refers to one in which a dispersoid is not separated from water

used as a dispersion medium or in which a dispersoid does not precipitate or aggregate. For example, a super absorbent polymer as described in Patent Literature 1, which absorbs water and becomes a gel when mixed with water, cannot form the aqueous solution or aqueous dispersion in the present invention. Thus, (i) the polymer or (ii) the salt of the polymer for forming the aqueous dispersion in the present invention is preferably free of a super absorbent polymer. Also, in a preferred embodiment of the present invention, the granulating agent of the present invention is free of a super absorbent polymer.

Here, the super absorbent polymer is a polymer having a water absorption capacity under no pressure (CRC) of 5 g/g or more as defined by ERT441.2-02.

When the polymer in the present invention is in the form of an aqueous solution or an aqueous dispersion, the amount of precipitate and aggregate is preferably 1% by mass or less relative to 100% by mass of the polymer. The amount is more preferably 0.5% by mass or less, still more preferably 0.1% by mass or less, particularly preferably 0.01% by mass or less, most preferably 0% by mass.

The precipitate and aggregate refer to a substance that precipitates or aggregates when the polymer or a salt of the polymer is mixed with the same weight of water. The term "precipitate and aggregate" does not refer to a substance that forms an aqueous solution or an aqueous dispersion.

The amount of the precipitate and aggregate can be measured by the following method.

First, the polymer or a salt of the polymer is mixed with the same weight of water, and the liquid mixture is filtered through a stainless steel mesh (100 mesh (opening 0.154 mm)) to obtain a filtrate. The obtained filtrate is dried in a hot air dryer at a temperature of 110°C for one hour to obtain a residue as a precipitate or aggregate. The amount of the precipitate and aggregate can be determined using the following equation:

Amount of precipitate and agglomerate (% by mass) = ([mass of residue]/[mass of polymer or salt of polymer]) $\times$ 100 (%)

(Different structural unit)

The polymer in the present invention can contain a structural unit (IV) at a remaining portion other than the structural units described above.

(Polymer constituent)

The polymer in the present invention preferably contains the structural unit (I) containing an acidic functional group in an amount of 10.0 to 90.0% by mass based on the total mass of the polymer. The amount of the structural unit (I) is more preferably 20.0 to 60.0% by mass, still more preferably 30.0 to 50.0% by mass. The polymer in the present invention preferably contains the hydrophobic structural unit (II) in an amount of 10.0 to 90.0% by mass based on the total mass of the polymer. Desirably, the amount of the hydrophobic structural unit (II) is more preferably 30.0 to 70.0% by mass, still more preferably 40.0 to 60.0% by mass. The polymer in the present invention desirably contains the hydrophobic structural unit (III) in an amount of 1.0 to 40.0% by mass, preferably 2.0 to 30.0% by mass, based on the total mass of the polymer.

The mass proportion of the structural unit (I) is a mass proportion in terms of acid form.

The phrase "in terms of acid form" refers to calculation of the mass proportion (proportion in the composition) of the structural unit (I) containing an acidic functional group based on the total mass of the polymer as the mass proportion of the acid type structural unit corresponding to the structural unit (I). For example, this means that the mass proportion of a structural unit derived from sodium acrylate based on the total mass of the polymer is calculated as that of a structural unit derived from acrylic acid, which is a corresponding acid type structure.

The proportion of the structural unit (IV), which is a structural unit other than the structural units (I), (II), and (III), is preferably 0 to 10% by mass based on the total mass of the polymer. The proportion is more preferably 0 to 5% by mass, still more preferably 0 to 1% by mass, most preferably 0% by mass.

The polymer in the present invention desirably contains the structural unit (I) containing an acidic functional group and the hydrophobic structural unit (II), more desirably contains the structural unit (I) containing an acidic functional group, the hydrophobic structural unit (II), and the hydrophobic structural unit (III), and more preferably consist of these units.

Some examples of the polymer in the present invention include (I) those obtained by polymerization using acrylic acid or methacrylic acid, (II) those obtained by copolymerization using alkyl (C1-C8) acrylate in addition to (I), (III) those obtained by copolymerization using a monomer containing a polyalkylene glycol group and the like in addition to (I) and (II), and (IV) those obtained by polymerizing acrylic acid or methacrylic acid entirely or partially neutralized.

Desirably, the polymer in the present invention is substantially free of structural units containing basic functional groups (unneutralized) or amide groups.

The polymer in the present invention has a weight average molecular weight (Mw) in terms of polystyrene of 1,000 to 10,000,000, preferably 2,000 to 8,000,000, more preferably 3,000 to 6,000,000, still more preferably 4,000 to 5,000,000, as determined by gel permeation chromatography (GPC). In one embodiment, the weight average molecular

weight of the polymer may be 10,000 to 2,500,000, preferably 50,000 to 1,000,000, more preferably 100,000 to 800,000, still more preferably 200,000 to 600,000.

The glass transition temperature of the polymer in the present invention is, for example, -40°C or higher, preferably -30°C or higher, more preferably -20°C or higher, particularly preferably -10°C or higher, from the viewpoint of film-forming properties. The upper limit of the glass transition temperature of the polymer in the present disclosure is, for example, 80°C or lower, preferably 75°C or lower, more preferably 65°C or lower, particularly preferably 50°C or lower.

The glass transition temperature of a polymer may be a temperature determined using the glass transition temperature(s) of the homopolymer(s) of a monomer(s) in a monomer component(s) constituting the polymer based on the Fox equation represented by the formula (I):

$$1/Tg = \Sigma(Wm/Tgm)/100 \quad (I)$$

wherein Wm is the proportion (% by mass) of a monomer m in the monomer component(s) constituting the polymer, and Tgm is the glass transition temperature (absolute temperature: K) of the homopolymer of the monomer m.

The acid value of the polymer in the present invention is, for example, 50 mgKOH/g or more, preferably 100 mgKOH/g or more, more preferably 150 mgKOH/g or more, still more preferably 180 mgKOH/g or more.

The upper limit of the acid value is, for example, 500 mgKOH/g or less, preferably 400 mgKOH/g or less, more preferably 300 mgKOH/g or less.

The acid value of the polymer in the present disclosure is determined, for example, by measuring the acid value (mgKOH/g) per gram of solids of the polymer using an automatic titrator (trade name: COM-555, available from HIRANUMA Co., Ltd.) in accordance with JIS K 0070:1992.

The total amount of the polymer and a salt of the polymer in 100 parts by mass of the granulating agent for fresh concrete of the present invention is preferably 10 parts by mass or more, more preferably 20 parts by mass or more, still more preferably 25 parts by mass, while it is preferably 60 parts by mass or less, more preferably 50 parts by mass or less, still more preferably 40 parts by mass or less.

The amount of solids (non-volatile components) in 100 parts by mass of the granulating agent for fresh concrete of the present invention is preferably 10 parts by mass or more, more preferably 20 parts by mass or more, still more preferably 25 parts by mass or more, while it is preferably 60 parts by mass or less, more preferably 50 parts by mass or less, still more preferably 40 parts by mass or less.

The amount of solids (non-volatile components) in the present invention can be determined by a known method, and can be determined, for example, based on the formula:

Amount of non-volatile component in granulating agent (% by mass) = ([mass of residue]/[1 g of granulating agent]) × 100 (%)

where the residue is obtained as a non-volatile component by drying 1 g of the granulating agent in a hot air dryer at a temperature of 110°C for one hour.

(Emulsion)

The granulating agent for fresh concrete of the present invention may be in the form of a liquid in which the above-described polymer is simply dissolved or dispersed in a solvent, particularly desirably in the form of an emulsion in which the polymer is coated with an emulsifier and formed into particulates (micellars).

Examples of the emulsion include oil-in-water (O/W) emulsions, water-in-oil (W/O) emulsions, oil-in-water-in-oil (O/W/O) emulsions, and water-in-oil-in-water (W/O/W) emulsions. Preferred are O/W emulsions and W/O emulsions, and more preferred are O/W emulsions. For example, when the super absorbent polymer described in Patent Literature 1, which is used in powder form, is mixed with fresh concrete, the super absorbent polymer is required to improve the handling. On the other hand, use of an O/W emulsion can achieve excellent workability during spraying and suppress rapid thickening at the time of adding the emulsion to fresh concrete, leading to expectation of uniform granulation.

While the anionic polyacrylamide polymer disclosed in Patent Literature 2 is in the form of an emulsion, it is a water-in-oil emulsion. Thus, the emulsion is required to improve from the viewpoint of environmental protection. On the other hand, when the granulating agent of the present invention is in the form of an O/W emulsion, it can further reduce the load on the environment.

Examples of a dispersion medium for the emulsion include water, oil, and alcohol. Preferred is water. The amount of solids (polymer and emulsifier) is 1.0 to 80.0% by mass, preferably 10.0 to 50.0% by mass, more preferably 20.0 to 40.0% by mass, based on the total mass of the emulsion.

Examples of the emulsifier used in the production of the emulsion include anionic emulsifiers, nonionic

emulsifiers, cationic emulsifiers, amphoteric emulsifiers, and polymeric emulsifiers. These emulsifiers may be used alone or in combination of two or more. The emulsifier is desirably present in the emulsion in an amount of 1.0 to 20.0% by mass, preferably 1.0 to 5.0% by mass, relative to the total weight of the polymer coated with the emulsifier.

The viscosity of the emulsion is, for example, 500 mPa·s or less, preferably 1 to 400 mPa·s, more preferably 5 to 300 mPa·s.

The viscosity of the emulsion can be measured at 25°C and 60 rpm using a B-type rotational viscometer (rotor No. 2) .

The emulsion desirably has a pH of 2.0 to 4.0. The pH of the emulsion can be measured by a known method. An example of the method is a method of measurement at 25°C using a pH meter (LAQUA available from HORIBA, Ltd.) in accordance with JIS Z 8802.

The average particle size of the particles (micelles) in the emulsion in the present invention may be, for example, 30 nm or more, preferably 50 nm or more. The upper limit of the average particle size of the emulsion particles is, for example, 3,000 nm or less, preferably 1,000 nm or less. The average particle size of the emulsion particles may be the volume average particle size measured using a dynamic light scattering particle size distribution analyzer [Particle Sizing Systems, trade name: NICOMP Model 380].

Non-limiting examples of the emulsifier include anionic emulsifiers (e.g., alkyl sulfates such as ammonium dodecyl sulfate and sodium dodecyl sulfate; alkyl sulfonates such as ammonium dodecyl sulfonate and sodium dodecyl sulfonate; alkylaryl sulfonates such as ammonium dodecylbenzene sulfonate and sodium dodecylnaphthalene sulfonate; polyoxyethylene alkyl sulfates; polyoxyethylene alkylaryl sulfates; polyoxyethylene alkyl ether sulfates; dialkyl sulfosuccinates; arylsulfonic acid-formalin condensates; fatty acid salts such as ammonium laurylate and sodium stearate), nonionic emulsifiers (e.g., polyoxyethylene alkyl ethers, polyoxyethylene alkylaryl ethers, condensates of polyethylene glycol and polypropylene glycol, sorbitan fatty acid esters, polyoxyethylene sorbitan fatty acid esters, fatty acid monoglycerides, condensates of ethylene oxide and aliphatic amines), cationic emulsifiers (e.g., dialkyldimethylammonium salts, ester-type dialkyl ammonium salts, amide-type dialkyl ammonium salts, dialkylimidazolinium salts), amphoteric emulsifiers (e.g., alkyldimethylaminoacetic acid betaines, alkyldimethylamine oxides, alkylcarboxymethylhydroxyethylimidazolinium betaines, alkylamidopropylbetaines, alkylhydroxysulfobetaines), and polymer emulsifiers (e.g., polyvinyl alcohol and its modified products; (meth)acrylic acid water-soluble polymers; hydroxyethyl (meth)acrylic acid water-soluble polymers; hydroxypropyl (meth)acrylic acid water-soluble polymers; polyvinylpyrrolidone). Preferred are anionic emulsifiers, and more preferred are polyoxyethylene alkyl ether sulfates.

(Method of producing emulsion)

An emulsion containing the polymer may be produced by any method, and may be produced by emulsion polymerizing a monomer component(s) as a raw material for the polymer in a solvent, for example.

Examples of the solvent include aqueous solvents such as water and solvents containing water [e.g., solvent mixtures of water and alcohols (e.g., a C1-C4 alcohol such as methanol or ethanol)]. The solvents may be used alone or in combination of two or more.

Non-limiting examples of a method of emulsion polymerizing the monomer component(s) include a polymerization method including adding dropwise the monomer component(s) to a solvent containing an emulsifier and a polymerization method including adding dropwise the monomer component(s) that has been emulsified with an emulsifier in advance to a solvent. Specific examples of the emulsifier include those listed above.

One or more of these emulsifiers may be used. The emulsifier may be a non-reactive emulsifier or a reactive emulsifier. From the viewpoint of the stability of emulsion particles, a non-reactive emulsifier is preferred, and a non-reactive anionic emulsifier is more preferred.

The amount of the solvent may be appropriately set in consideration of the amount of non-volatile components contained in the resulting emulsion.

The polymerization may be carried out in the presence of a polymerization initiator.

Examples of the polymerization initiator include azo compounds such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid), and 2,2-azobis(2-methylpropionamidine); persulfates such as potassium persulfate; and peroxides such as hydrogen peroxide, benzoyl peroxide, p-chlorobenzoyl peroxide, lauroyl peroxide, and ammonium peroxide.

The polymerization initiators may be used alone or in combination of two or more.

The amount of the polymerization initiator used may be appropriately set according to the type of the polymerization initiator, and is not limited. For example, the amount may be, for example, 0.05 parts by mass or more, preferably 0.1 parts by mass or more, relative to 100 parts by mass of the monomer component(s), while it may be, for example, 2 parts by mass or less, preferably 1 part by mass or less, relative to 100 parts by mass of the monomer component(s).

The polymerization initiator may be added by any method, and may be added in a single batch, multiple butches,

or by continuous dropwise addition, for example.

The polymerization reaction may be performed, if necessary, in the presence of a reducing agent (e.g., sodium bisulfite), an agent for decomposing a polymerization initiator (e.g., a transition metal salt such as ferrous sulfate), a chain transfer agent (e.g., a thiol group-containing compound such as tert-dodecyl mercaptan), a pH buffer, a chelating agent, or the like.

The polymerization may be performed in any atmosphere and may be performed in an inert gas atmosphere such as a nitrogen atmosphere from the viewpoint of polymerization efficiency.

The polymerization temperature is not limited and may be, for example, 50°C to 100°C, preferably 60°C to 95°C. The polymerization temperature may be constant or may be changed during the polymerization reaction. The polymerization time is not limited and may be set appropriately depending on the progress of the polymerization reaction. For example, the polymerization time may be, for example, one hour or more (e.g., 1 to 24 hours), preferably around 2 to 12 hours (e.g., 2 to 9 hours) .

(Granulating agent)

A granulating agent for fresh concrete of the present invention is particularly expected to be used in a step of forming a granulated material by adding the granulating agent to fresh concrete, stirring to obtain a mixture, and curing the mixture.

The present invention also relates to use of (i) a polymer that exhibits an acidic pH when in the form of an aqueous solution or an aqueous dispersion or (ii) a salt of the polymer, for granulation of fresh concrete.

The present invention also encompasses a method of curing a stirred mixture of the granulating agent and fresh concrete.

The present invention also encompasses a method of producing a granulated material, the method including adding the granulating agent to fresh concrete and curing the mixture obtained in the adding.

Fresh concrete refers to concrete before hardening, which is obtained by mixing cement and water. In the present invention, the water-cement ratio (W/C (%)) thereof is 20% to 60%, preferably 30% to 55%, more preferably 40% to 50%. The granulating agent is desirably added in an amount of 0.5 to 5.0 kg per $m^3$ of fresh concrete. Regarding the stirring, it is sufficient to stir in a drum at 10 to 60 rpm for around 2 to 10 minutes, and the curing can be completed by leaving the mixture in the open air for at least one hour. Conceivable examples of a more specific step of using the granulating agent of the present invention include: a step in which the granulating agent is introduced into a mixer (e.g., a ready-mixed concrete truck) loaded with fresh concrete, followed by stirring, and after the stirring, the fresh concrete is discharged; and a step in which a remaining concrete is discharged into a waste pit, the granulating agent is added thereto, and the concrete is stirred and mixed by hand or with heavy equipment or the like and is cured.

The granulating agent for fresh concrete of the present invention may or may not contain a quick setting accelerator such as sodium silicate, calcium aluminate, aluminum sulfate, sodium aluminate, or alumina cement.

The proportion of the quick setting accelerator in the granulating agent is preferably 1% by mass or less based on 100% by mass of the granulating agent. The proportion is more preferably 0.5% by mass or less, still more preferably 0.1% by mass or less, most preferably 0% by mass.

In a preferred embodiment of the present invention, the granulating agent is free of a quick setting accelerator.

(Granulated material)

A granulated material containing the granulating agent of the present invention and cement is produced by using the granulating agent for fresh concrete of the present invention. The granulated material is expected to be reused as new building materials (e.g., paving materials, roadbed materials, materials for civil engineering structures and buildings). Desirably, the granulated material has a long axis of 60 mm or less, preferably 50 mm or less; some granulated materials have a long axis of 5 mm or more (equivalent to coarse aggregate), and some granulated materials have a long axis of 5 mm or less (equivalent to fine aggregate); and these granulated materials can be used separately.

## EXAMPLES

The following describes the present invention in more detail based on examples, but the present invention is not limited to these examples. Hereinafter, "part(s)" means "part(s) by mass", unless otherwise specified.

<Production Example 1: production of polymer as dispersant 1 for cement>

A glass reaction vessel equipped with a Dimroth condenser, a stirrer equipped with a stirrer blade made of Teflon® and a stirrer seal, a nitrogen inlet tube, and a temperature sensor was charged with 80.0 parts of ion exchange water. Under

stirring at 250 rpm, the content was heated to 70°C while nitrogen was introduced at 200 mL/min. Then, a solution mixture of 133.4 parts of methoxypolyethylene glycol monomethacrylate (average number of moles of ethylene oxide added: 9), 26.6 parts of methacrylic acid, 1.53 parts of mercaptopropionic acid, and 106.7 parts of ion exchange water was added dropwise over four hours. At the same time, a solution mixture of 1.19 parts of ammonium persulfate and 50.6 parts of ion exchange water was added dropwise over five hours. After the completion of the dropwise addition, the temperature was maintained at 70°C for one hour. Thereby, the polymerization reaction was completed. The obtained reaction product was neutralized with an aqueous sodium hydroxide solution. Thus, an aqueous solution of a dispersant 1 for cement having a weight average molecular weight of 100,000 was obtained.

<Example 1>

A flask equipped with a dropping funnel, a stirrer, a nitrogen gas inlet tube, a thermometer, and a reflux condenser was charged with 453 parts of deionized water and 64 parts of a 20% aqueous solution of an emulsifier [DKS Co. Ltd., trade name: HITENOL LA-10]. In the dropping funnel, a pre-emulsion was prepared, consisting of 30 parts of deionized water, 32 parts of a 20% aqueous solution of an emulsifier [DKS Co. Ltd., trade name: HITENOL LA-10], 322 parts of ethyl acrylate, 234 parts of methacrylic acid, and 832 parts of a 10% aqueous solution of methylpolyethylene glycol (90) monomethacrylate [NOF Corporation, trade name: BLEMMER PME-4000]. Then, 73 parts thereof was introduced into the flask, and heated to 72°C while nitrogen gas was gently blown thereinto. To the flask were introduced 2.3 parts of a 5.0% aqueous sodium bisulfite solution and 8 parts of a 1.0% aqueous ammonium persulfate solution to initiate polymerization. Next, the remaining portion of the emulsion for dropwise addition and 144 parts of a 1.0% aqueous ammonium persulfate solution were uniformly added dropwise into the flask over 120 minutes. After the completion of the dropwise addition, the contents of the flask were maintained at 72°C for 60 minutes and cooled to stop the polymerization reaction. The resulting reaction solution was cooled to room temperature and then filtered through a 300-metal mesh (JIS mesh, the same below) to obtain an emulsion with a non-volatile content of 29.6% by mass. The emulsion particles contained in the resin emulsion had an average particle size of 136 nm and had an overall glass transition temperature of 14°C.

<Examples 2 to 12>

Emulsions of Examples 2 to 12 were prepared as in Example 1, except that the monomer components (ethyl acrylate, methacrylic acid, and methyl polyethylene glycol (90) monomethacrylate) used in Example 1 and the compositional ratio thereof were changed to the monomer components (a, b, and c) and the compositional ratio (mass ratio) (a:b:c) shown in Tables 1 and 2 below. The properties of the resin emulsions are specifically shown in Tables 1 and 2 below.

The following specifically describes methods of evaluating the properties of the polymers and emulsions produced herein.

<Particle size>

Herein, the average particle size of the emulsion particles refers to the volume average particle size measured using a dynamic light scattering particle size distribution analyzer [Particle Sizing Systems, trade name: NICOMP Model 380].

<Solid (non-volatile component)>

The amount of solids in the emulsion refers to a value determined based on the formula: amount of non-volatile component (% by mass) in emulsion = ([mass of residue])/[1 g of emulsion]) × 100 (%), where the residue is obtained as a non-volatile component by drying 1 g of the emulsion in a hot air dryer at a temperature of 110°C for one hour.

<Molecular weight>

A weight average molecular weight was determined by gel permeation chromatography (GPC) [Tosoh Corporation, product number: HLC-8120GPC, column: TSKgel G-5000HXL and TSKgel GMHXL-L used in series] in terms of polystyrene.

<pH>

The pH was measured at 25°C using a pH meter (LAQUA available from HORIBA, Ltd.) in accordance with JIS Z 8802.

<Tg>

Herein, the glass transition temperature of a resin refers to the temperature determined using the glass transition temperature(s) of the homopolymer(s) of a monomer(s) in the monomer component(s) constituting the resin based on the Fox equation represented by the formula:

$$1/Tg = \Sigma(Wm/Tgm)/100$$

wherein Wm is the proportion (% by mass) of a monomer m in the monomer component(s) constituting the resin, and Tgm is the glass transition temperature (absolute temperature: K) of the homopolymer of the monomer m.

Herein, the glass transition temperature of the resin constituting the emulsion particles refers to the glass transition temperature determined based on the Fox equation, unless otherwise specified.

The glass transition temperature of the entire emulsion particle having multiple resin layers refers to the glass transition temperature determined, based on the Fox equation, using the glass transition temperatures of the homopolymers of the monomers in the entire monomer components used as the material of all the resin layers in multi-stage emulsion polymerization. Regarding monomers whose glass transition temperatures are unknown, such as special monomers and polyfunctional monomers, when the total amount of monomer(s) whose glass transition temperature is unknown in the monomer components is 10% by mass or less in terms of mass fraction, the glass transition temperature is determined using only monomer(s) whose glass transition temperatures is known. When the total amount of monomer(s) whose glass transition temperatures is unknown in the monomer components exceeds 10% by mass in terms of mass fraction, the glass transition temperature of the resin can be determined by differential scanning calorimetry (DSC), differential calorimetry (DTA), thermomechanical analysis (TMA), etc.

For example, the glass transition temperatures of the resin is 105°C for the homopolymer of methyl methacrylate, -70°C for the homopolymer of 2-ethylhexyl acrylate, -56°C for the homopolymer of n-butyl acrylate, -83°C for the homopolymer of cyclohexyl methacrylate, 107°C for the homopolymer of tert-butyl methacrylate, 55°C for the homopolymer of 2-hydroxyethyl methacrylate, 95°C for the homopolymer of acrylic acid, 130°C for the homopolymer of methacrylic acid has a glass transition temperature, and 100°C for the homopolymer of styrene has a glass transition temperaturef.

<Acid value>

The acid value per gram of solids of a resin (mgKOH/g) was measured using an automatic titrator (trade name: COM-555, available from HIRANUMA Co., Ltd.) in accordance with JIS K 0070:1992.

The product names and abbreviations shown in Tables 1 to 3 have the following meanings.

MAA: methacrylic acid
EA: ethyl acrylate
MA: methyl acrylate
EO: ethylene oxide (ethylene glycol)
PO: propylene oxide (propylene glycol)
BO: butylene oxide (butylene glycol)
BLEMMER® PME-4000: methoxypolyethylene glycol (90) monomethacrylate
BLEMMER® PSE-1300: stearoxypolyethylene glycol (30) monomethacrylate
BLEMMER® PP-800: polypropylene glycol (13) monomethacrylate
BLEMMER® PE-350: polyethylene glycol (8) monomethacrylate
BLEMMER® 10PPB-500B: propylene glycol polybutylene glycol (6) monomethacrylate
HITENOL LA-10: polyoxyethylene alkyl ether sulfate ammonium salt
ADEKA REASOAP SR-20: ether sulfate type ammonium salt
IPN-50: product prepared by adding ethylene oxide to the hydroxy group of 3-methyl-3-buten-1-ol (isoprenol) (average number of moles of ethylene oxide added is 50)

[Table 1]

| | | Example 1 | Example 2 | Example 3 | Example 4 | Example 5 | Example 6 |
|---|---|---|---|---|---|---|---|
| Acidic functional group-containing monomer (a) | | MAA | MAA | MAA | MAA | MAA | MAA |
| Hydrophobic group monomer (b) | | EA | EA | EA | EA | EA | EA |
| Monomer (c) containing (alkoxy) polyalkylene glycol group | Name | BLEMMER® PME-4000 | BLEMMER® PSE-1300 | BLEMMER® PSE-1300 | BLEMMER® PSE-1300 | BLEMMER® PSE-1300 | BLEMMER® PP-800 |
| | Polymerizable group | Methacrylate | Methacrylate | Methacrylate | Methacrylate | Methacrylate | Methacrylate |
| | Alkylene oxide (AO) | EO | EO | EO | EO | EO | PO |
| | Number of moles of AO added (n) | 90 | 30 | 30 | 30 | 30 | 13 |
| | Terminal group ® | Methyl | Stearyl | Stearyl | Stearyl | Stearyl | Hydrogen |
| a:b:c | | 37:50:13 | 34:46:20 | 34:46:20 | 39:53:08 | 30:40:30 | 41:56:03 |
| Emulsifier | | HITENOL LA-10 | ADEKA REA-SOAP SR-10 | ADEKA REA-SOAP SR-10 | HITENOL LA-10 | HITENOL LA-10 | HITENOL LA-10 |
| Amount of emulsifier (%/total monomer) | | 3 | 5 | 5 | 3 | 3 | 3 |
| Additive | | - | - | - | - | - | - |
| Solid (non-volatile component) (%) | | 29.6 | 29.9 | 30.1 | 30 | 30 | 29.8 |
| Average particle size (nm) | | 136 | 120 | 102 | 54 | 100 | 57 |
| pH | | 2.6 | 2.8 | 2.9 | 3.1 | 2.9 | 3.1 |
| Tg (°C) | | 14 | 7 | 7 | 18 | -2 | 22 |
| Acid value (mg KOH/g) | | 231 | 213 | 213 | 242 | 186 | 260 |
| Weight average molecular weight | | 400,000 | 380,000 | 440,000 | 360,000 | 370,000 | 360,000 |
| | | Example 7 | Example 8 | Example 9 | Example 10 | Example 11 | Example 12 |
| Acidic functional group-containing monomer (a) | | MAA | MAA | MAA | MAA | MAA | MAA |
| Hydrophobic group monomer (b) | | EA | EA | EA | EA | EA | EA |

(continued)

| | | Example 7 | Example 8 | Example 9 | Example 10 | Example 11 | Example 12 |
|---|---|---|---|---|---|---|---|
| Monomer (c) containing (alkoxy) polyalkylene glycol group | Name | BLEMMER® PP-800 | BLEMMER® PE-350 | BLEMMER® 10PPB-500B | IPN-50 | - | - |
| | Polymerizable group | Methacrylate | Methacrylate | Methacrylate | 3-methyl-3-butenyl ether | - | - |
| | Alkylene oxide (AO) | PO | EO | PO/BO | EO | - | - |
| | Number of moles of AO added (n) | 13 | 8 | 1/6 | 50 | - | - |
| | Terminal group ® | Hydrogen | Hydrogen | Hydrogen | Hydrogen | - | - |
| a:b:c | | 41:56:03 | 41:57:02 | 41:57:02 | 40:55:05 | 42:58:00 | 40:60:0 |
| Emulsifier | | ADEKA REASOAP SR-10 | HITENOL LA-10 | HITENOL LA-10 | HITENOL LA-10 | HITENOL LA-10 | ADEKA REASOAP SR-10 |
| Amount of emulsifier (%/total monomer) | | 5 | 3 | 3 | 3 | 3 | 3 |
| Additive | | - | - | - | - | - | PEG 1000 |
| Solid (non-volatile component) (%) | | 30.1 | 29.8 | 29.7 | 29.9 | 30 | 30.5 |
| Average particle size (nm) | | 55 | 60 | 52 | 63 | 60 | 76 |
| pH | | 3.1 | 3.1 | 2.9 | 3.2 | 3.1 | 3.7 |
| Tg (°C) | | 22 | 23 | 31 | 25 | 25 | 23 |
| Acid value (mg KOH/g) | | 260 | 262 | 261 | 252 | 253 | 253 |
| Weight average molecular weight | | 330,000 | 300,000 | 330,000 | 360,000 | 380,000 | 400,000 |

<Example 13>

A 2.5 L stainless steel reaction vessel equipped with a PAA reflux condenser and a stirrer was charged with 1358.8 g of deionized water. The content was heated to the boiling point under stirring. Next, under stirring, to the polymerization reaction system at the boiling point were added dropwise 523.5 g (i.e., 5.82 mol) of an 80% by weight aqueous acrylic acid solution (hereinafter referred to as "80% AA") over 75 minutes, 7.8 g of a 15% by weight aqueous sodium persulfate solution (hereinafter referred to as "15% NaPS") over 140 minutes, and 109.9 g of deionized water over 140 minutes from nozzle ends through separate supply routes. Each component was added dropwise sequentially at a constant rate. After the completion of the dropwise addition of 80% AA, the reaction solution was further maintained at the boiling point (aged) for 65 minutes to complete the polymerization, thereby obtaining an aqueous (meth)acrylic acid polymer solution. The aqueous solution had a weight average molecular weight (Mw) of 450,000 and a number average molecular weight (Mn) of 73,000.

<Example 14>

A 2000 ml stainless steel vessel was charged with 1460 g of a 37% aqueous sodium acrylate solution. The aqueous sodium acrylate solution was subjected to nitrogen bubbling to remove dissolved oxygen. Next, the temperature of the aqueous solution was adjusted to 20°C, and to the aqueous solution were added 20 g of a 0.289% aqueous solution of a photopolymerization initiator V-50 (Wako Pure Chemical Industries, Ltd., azo photopolymerization initiator, chemical name: 2,2'-azobis-2-amidinopropane dihydrochloride) and 20 g of a 0.862% aqueous solution of sodium hypophosphite (chain transfer agent), followed by mixing uniformly. The concentration of the monomer (sodium acrylate) in the reaction solution was 36% by mass. The amount of V-50 added was 0.01 g per mole of the monomer. The amount of sodium hypophosphite added was 0.03 g per mole of the monomer. The completely neutralized polyacrylic acid polymer had a weight average molecular weight (Mw) of 640,000 and a number average molecular weight (Mn) of 112,000. The degree of dispersion (Mw/Mn) was 5.7.

<Example 15>

A 2000 ml stainless steel vessel was charged with 240 g of acrylic acid, 918 g of a 37% aqueous sodium acrylate solution, and 282 g of ion exchange water, thereby obtaining an aqueous solution in which part of acrylic acid had been neutralized. The aqueous solution in which part of acrylic acid had been neutralized was subjected to nitrogen bubbling to remove dissolved oxygen. Next, the temperature of the aqueous solution was adjusted to 20°C, and to the aqueous solution were added 20 g of a 0.36% acrylic acid solution of a photopolymerization initiator Darocur 1173 (Ciba Specialty Chemicals, chemical name: 2-hydroxy-2-methyl-1-phenyl-propan-1-one) and 20 g of a 0.36% aqueous solution of sodium hypophosphite (chain transfer agent), followed by mixing uniformly to obtain a reaction solution. The reaction solution contains acrylic acid and sodium acrylate as monomers, and the proportion of the salt-type monomer (sodium acrylate) in all monomers, that is, the degree of neutralization, was 50 mol%. The concentration of the monomers (acrylic acid and sodium acrylate) in the reaction solution was 40% by mass. The amount of Darocur 1173 added was 0.01 g per mole of the monomers. The amount of sodium hypophosphite added was 0.01 g per mole of the monomers. The polymer salt had a weight average molecular weight (Mw) of 2,530,000 and a number average molecular weight (Mn) of 44,000. The degree of dispersion (Mw/Mn) was 57.5.

The compositions (molar ratio) of the monomer components used for the polymers of Examples 13 to 15 and the properties of the copolymers (salts) are shown in Table 3 below.

AA: acrylic acid
SA: sodium acrylate

[Table 3]

| | Example 13 | Example 14 | Example 15 |
|---|---|---|---|
| Acidic functional group-containing monomer (a) | AA | SA | AA:SA |
| Composition | 100 | 100 | 50:50 |
| Weight average molecular weight (Mw) | 450,000 | 640,000 | 2,530,000 |
| Number average molecular weight (Mn) | 73,000 | 112,000 | 44,000 |

(continued)

| | | Example 13 | Example 14 | Example 15 |
|---|---|---|---|---|
| Evaluation of granulation five minutes after addition of agent | 2.0 kg/m$^3$ addition | ○ | ○ | ○ |
| | 4.0 kg/m$^3$ addition | ○ | ○ | ○ |

<Concrete mixing method and granulation test>

Ordinary portland cement (Taiheiyo Cement Corporation) as cement, land sand from the Oigawa River system as a fine aggregate, crushed stone from Aomi as a coarse aggregate, and tap water as mixing water were used. Fresh concrete was prepared by mixing the cement in an amount of 382 kg/m$^3$, the water in an amount of 172 kg/m$^3$, the fine aggregate in an amount of 796 kg/m$^3$, and the coarse aggregate in an amount of 930 kg/m$^3$ so that the proportion of the fine aggregate (fine aggregate/(fine aggregate + coarse aggregate)) (volume ratio) was 47% and the water/cement ratio (mass ratio) was 0.45.

The mixing for the preparation was carried out using a forced mixing mixer at a room temperature of 20 ± 3°C and a humidity of 60 ± 5% for a mixing time of 90 seconds. The fresh concrete was subjected to measurement of flow value and air content in accordance with Japanese Industrial Standards (JIS A-1101, 1128:2014). To the fresh concrete was added the dispersant 1 for cement so that the slump flow value thereof was 400 mm ± 20 mm.

To set the temperature of the fresh concrete at a measurement temperature of 20°C, the temperatures of the materials used for measurement, forced mixing mixer, and measuring instruments were adjusted in the above-described measurement temperature atmosphere, and the mixing and measurements were carried out in the above-described measurement temperature atmosphere. In addition, to avoid the effect of air bubbles in the fresh concrete on the fluidity of a cement composition, an oxyalkylene antifoaming agent was used as necessary to adjust the air content to 4.5 ± 0.5%.

The fresh concrete was subjected to measurement of flow value and air content, allowed to stand for 30 minutes, and put into a 70 L tilting mixer (KYC Machine Industry Co., Ltd.). Any of the solutions produced in Examples 1 to 15 was added thereto. The contents were stirred for five minutes at a rotational speed of 20 rpm, and the granulated material was discharged from the mixer and allowed to stand for one hour for curing. After the curing, each of the granulated materials of Examples 1 to 15 was classified (sieved) using a JIS sieve with an opening of about 4 mm and a JIS sieve with an opening of about 10 mm.

Here, to the fresh concrete in the mixer was added 0.5 kg/m$^3$ of any of the solutions (emulsions) of Examples 1 to 12 or 4.0 kg/m$^3$ of any of the solutions (emulsions) of Examples 13 to 15. The results after the sieving are shown in Tables 4 to 6 below (the units of the numerical values without units shown in the tables are "% by mass").

[Table 4]

| | | Example 1 | Example 2 | Example 3 | Example 4 | Example 5 | Example 6 |
|---|---|---|---|---|---|---|---|
| Particle size after stirring for five minutes in the case of 0.5 kg/m$^3$ addition | 10 mm or more | 86.7 | 87.4 | 83.1 | 86.4 | 87.6 | 80.9 |
| | Less than 10 mm and 4 mm or more | 8.4 | 7.7 | 15.1 | 8.6 | 9.6 | 14.7 |
| | Less than 4 mm | 4.9 | 4.8 | 1.8 | 5.0 | 2.9 | 4.5 |

[Table 5]

| | | Example 7 | Example 8 | Example 9 | Example 10 | Example 11 | Example 12 |
|---|---|---|---|---|---|---|---|
| Particle size after stirring for five minutes in the case of 0.5 $kg/m^3$ addition | 10 mm or more | 83.5 | 84.8 | 83.6 | 80.4 | 89.3 | 91.1 |
| | Less than 10 mm and 4 mm or more | 8.7 | 10.6 | 12.6 | 8.9 | 6.4 | 4.6 |
| | Less than 4 mm | 7.8 | 4.5 | 3.8 | 10.7 | 4.3 | 4.3 |

[Table 6]

| | | Example 13 | Example 14 | Example 15 |
|---|---|---|---|---|
| Particle size after mixing for five minutes in the case of 4.0$kg/m^3$ addition | 10 mm or more | 89.2 | 82.4 | 80.3 |
| | Less than 10 mm and 4 mm or more | 6.1 | 13.9 | 14.9 |
| | Less than 4 mm | 4.8 | 3.7 | 4.8 |

The results in Tables 4 and 5 demonstrate that Examples 1 to 12 (containing a structural unit containing one carboxy group) according to the present invention show an excellent ability to granulate fresh concrete. Examples 1 to 10 that contain a structural unit containing a polyalkylene glycol group (terminated with a hydroxy group) or an alkoxypolyalkylene glycol group (terminated with an alkyl group) tend to provide smaller size granulated materials than Examples 11 and 12. The results also demonstrate that although the addition amounts in Examples 1 to 12 were smaller than those in Examples 13 to 15, Examples 1 to 12 in which emulsification was performed achieve a granulation ability similar to that in Examples 13 to 15 described below in which emulsification was not performed.

The results in Table 6 demonstrate that Examples 13 to 15 according to the present invention (containing a structural unit containing one carboxy group and/or a structural unit obtained by neutralizing the structural unit) show an excellent ability to granulate fresh concrete. The results also demonstrate that Examples 14 and 15 containing a structural unit containing a neutralized carboxy group tend to provide smaller size granulated materials than Example 13.

## Claims

**1.** A granulating agent for fresh concrete, comprising:

(i) a polymer that exhibits an acidic pH when in the form of an aqueous solution or an aqueous dispersion or
(ii) a salt of the polymer.

**2.** The granulating agent for fresh concrete according to claim 1,
wherein the polymer is emulsified.

**3.** The granulating agent for fresh concrete according to claim 1 or 2,
wherein the polymer comprises a structural unit containing a carboxy group.

**4.** The granulating agent for fresh concrete according to any one of claims 1 to 3,
wherein the polymer is a copolymer further comprising a hydrophobic structural unit.

**5.** The granulating agent for fresh concrete according to any one of claims 1 to 4,
wherein the granulating agent comprises a polymer that exhibits an acidic pH when in the form of an aqueous solution or an aqueous dispersion, and the polymer exhibits a pH of 2.0 to 5.0 when in the form of a 10.0% by mass aqueous

solution or aqueous dispersion at 25.0°C.

**6.** The granulating agent for fresh concrete according to any one of claims 1 to 5, wherein the polymer has a weight average molecular weight of 1,000 to 10,000,000.

**7.** The granulating agent for fresh concrete according to any one of claims 1 to 6, wherein the granulating agent comprises a polymer that exhibits an acidic pH when in the form of an aqueous solution or an aqueous dispersion, and the polymer is emulsified in water used as a dispersion medium.

**8.** The granulating agent for fresh concrete according to any one of claims 1 to 7, wherein the granulating agent is free of a quick setting accelerator.

**9.** A method of forming a granulated material, comprising:

adding the granulating agent according to any one of claims 1 to 8 to fresh concrete, followed by stirring to give a mixture; and
curing the mixture.

**10.** A granulated material comprising:

the granulating agent according to any one of claims 1 to 8; and
cement.

## INTERNATIONAL SEARCH REPORT

International application No.
**PCT/JP2023/000564**

**A. CLASSIFICATION OF SUBJECT MATTER**

***B28C 7/04***(2006.01)i; ***C08F 290/06***(2006.01)i; ***C08F 220/04***(2006.01)i; ***C08F 220/10***(2006.01)i; ***C04B 24/00***(2006.01)i; ***C04B 24/26***(2006.01)i; ***C04B 28/02***(2006.01)i
FI: C04B24/00; C04B28/02; C04B24/26 E; C08F220/04; C08F220/10; C08F290/06; B28C7/04

According to International Patent Classification (IPC) or to both national classification and IPC

**B. FIELDS SEARCHED**

Minimum documentation searched (classification system followed by classification symbols)

B28C7/04; C04B7/00-C04B28/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | 山口信, 残コンクリートの団粒化によるポーラスコンクリートの製造とその基礎物性, セメント・コンクリート論文集, 25 February 2012, no. 65, pages 523-528, (Cement Science & Concrete Technology.), non-official translation (YAMAGUCHI, Makoto. Production of porous concrete by agglomeration of residual concrete and its basic physical properties.) pages 523-524 | 1-10 |
| Y | 坂口康義, アクリル酸またはメタクリル酸の数種の共重合物の電位差滴定, 高分子化学, 1970, vol. 27, no. 306, pages 747-752, (Chemistry of High Polymer.), non-official translation (SAKAGUCHI, Yasuyoshi. Potentiometric titration of several copolymers of acrylic acid or methacrylic acid.) page 748 | 1-10 |
| X | JP 2014-505006 A (MAPEI S.P.A) 27 February 2014 (2014-02-27) claims, table 1 | 1-5, 7, 9-10 |
| Y | | 6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 February 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/000564**

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2014-181147 A (AIZAWA KOATSU CONCRETE KK) 29 September 2014 (2014-09-29)<br>claims, paragraphs [0028]-[0030], [0060] | 1-10<br><br>6 |
| A | JP 7-118079 A (TAKENAKA KOMUTEN CO., LTD.) 09 May 1995 (1995-05-09)<br>paragraph [0032] | 1-10 |
| A | JP 2017-124569 A (FUSOH MATERIAL CO., LTD.) 20 July 2017 (2017-07-20) | 1-10 |
| A | JP 2010-518213 A (EVONIK STOCKHAUSEN GMBH) 27 May 2010 (2010-05-27) | 1-10 |
| A | 赤尾優弥, コンクリートの強度と耐凍結融解性を向上させる吸水遅延型の新規高吸水性樹脂の開発, セメント・コンクリート, 10 October 2020, no. 884, pages 25-30, (Development of novel super absorbent polymer with slow absorption rate towards increasing compressive strength and resistance to freezing and thawing action of concrete. Cement and concrete.), non-official translation (AKAO, Yuya.)<br>entire text | 1-10 |

Form PCT/ISA/210 (second sheet) (January 2015)

**INTERNATIONAL SEARCH REPORT**
**Information on patent family members**

International application No.
**PCT/JP2023/000564**

| Patent document cited in search report | Publication date (day/month/year) | Patent family member(s) | Publication date (day/month/year) |
|---|---|---|---|
| JP 2014-505006 A | 27 February 2014 | WO 2012/084716 A1<br>claims, table 1 | |
| JP 2014-181147 A | 29 September 2014 | (Family: none) | |
| JP 7-118079 A | 09 May 1995 | (Family: none) | |
| JP 2017-124569 A | 20 July 2017 | (Family: none) | |
| JP 2010-518213 A | 27 May 2010 | US 2010/0036004 A1<br>CN 101240081 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012084716 A
- JP 2017124569 A


### Non-patent literature cited in the description


- *POLYMER ENGINEERING AND SCIENCE*, 1974, vol. 14 (2)